# EUROPEAN PATENT APPLICATION

(11) **EP 4 679 268 A1**
(43) Date of publication of application: **14.01.2026**
(21) Application number: 23930109.6
(22) Date of filing: 19.12.2023
(51) Int. Cl.: G06F 9/455

(54) **METHOD FOR PROCESSING ERRATA BY VIRTUAL MACHINE, AND RELATED DEVICE**

(30) Priority: 30.03.2023 CN 202310353270
(71) Applicant: Huawei Technologies Co., Ltd., Shenzhen, Guangdong 518129 (CN)
(72) Inventor: JIANG, Kunkun, Shenzhen, Guangdong 518129 (CN); WANG, Haibin, Shenzhen, Guangdong 518129 (CN); ZENG, Tao, Shenzhen, Guangdong 518129 (CN)
(74) Representative: Gill Jennings & Every LLP
(86) International application number: PCT/CN2023/139804
(87) International publication number: WO 2024/198545

(57) **Abstract**

This application provides a method for processing errata by a virtual machine, and a related device, and relates to the field of computer technologies. The method for processing errata by a virtual machine is applied to an electronic device. The electronic device includes a CPU architecture including at least one type of physical CPU, and a VM and a VMM for managing the VM running on the electronic device. The method includes: The VMM obtains errata-related information of the CPU architecture, and shares the errata-related information with the VM, where the errata-related information includes CPU type information and timer errata information; the VM identifies, based on the errata-related information, errata in the CPU architecture; and the VM performs repair processing on the identified errata. In this application, the virtual machine may accurately process the errata in the CPU architecture, thereby improving running stability of the virtual machine.

## Description

This application claims priority to Chinese Patent Application No. 202310353270.X, filed with the China National Intellectual Property Administration on March 30, 2023 and entitled "METHOD FOR PROCESSING ERRATA BY VIRTUAL MACHINE, AND RELATED DEVICE", which is incorporated herein by reference in its entirety.

### TECHNICAL FIELD

This application relates to the field of computer technologies, and in particular, to a method for processing errata by a virtual machine, and a related device.

### BACKGROUND

A heterogeneous central processing unit (central processing unit, CPU) architecture is an architecture that uses a plurality of different types of processors. For example, a big.LITTLE architecture includes CPUs of two different types of architectures, where a "LITTLE" CPU is intended to achieve highest energy efficiency, and a "big" CPU is intended to provide highest computing performance. The two types of CPUs may access a same memory area, so that workloads may be dynamically scheduled between the two types of CPUs.

Different types of CPUs in a heterogeneous CPU architecture are generally different in terms of an instruction set, a microarchitecture, a feature set, and the like. Facing these differences, an operating system running on the heterogeneous CPU architecture usually need some architectural compatibility designs, for example, shielding differences between heterogeneous CPUs and providing a unified running environment for the entire operating system. One of typical differences between different types of CPUs is errata (Errata). There may be errata in instructions of a CPU (referred to as CPU Errata below), and there may also be errata in a timer component of the CPU (referred to as Timer Errata below). An errata management system may be configured in the operating system to manage errata in different types of CPUs.

For a virtual machine constructed based on a heterogeneous CPU architecture, firmware used by a virtual CPU of the virtual machine is constructed by a virtual machine monitor (virtual machine monitor, VMM). The virtual machine identifies timer errata based on the firmware created by the VMM. However, a related timer errata description field may not be added to the firmware created by the VMM. As a result, the timer errata are not completely identified. CPU type information read by the virtual machine is related to a physical CPU in which the virtual CPU is located during startup of the virtual machine. As a result, identified CPU errata may be incomplete, and identified timer errata may also be incomplete. Due to the foregoing reasons, an errata management system in the virtual machine cannot obtain all errata in the heterogeneous CPU architecture. As a result, the errata management system in the virtual machine cannot smoothly process all errata in the heterogeneous CPU architecture, thereby affecting normal running of a service in the virtual machine.

### SUMMARY

In view of this, it is necessary to provide a method for processing errata by a virtual machine, so that the virtual machine may accurately process errata in a CPU architecture, thereby improving running stability of the virtual machine.

A first aspect of embodiments of this application discloses a method for processing errata by a virtual machine, applied to an electronic device. The electronic device includes a CPU architecture including at least one physical CPU, and a virtual machine (virtual machine, VM) and a VMM for managing the VM running on the electronic device. The method includes: The VMM obtains errata-related information of the CPU architecture, and shares the errata-related information with the VM, where the errata-related information includes CPU type information and timer errata information; the VM identifies, based on the errata-related information, errata in the CPU architecture; and the VM performs repair processing on the identified errata.

According to the foregoing technical solution, the VMM running in a back-end operating system (that is, a host operating system, a host OS) maintains all CPU type information and all timer errata information in the CPU architecture and shares the CPU type information and the timer errata information with the VM at a front end, so that the VM may identify all possible errata (for example, CPU errata and timer errata) in the CPU architecture, thereby avoiding a problem that the VM cannot smoothly process errata in a heterogeneous CPU architecture because the VM cannot accurately obtain all errata in the heterogeneous CPU architecture, and improving running stability of a service in the VM.

In some embodiments, the CPU type information includes type information of each type of physical CPU in the CPU architecture, and the timer errata information includes first timer errata information and second timer errata information. That the VMM obtains errata (errata)-related information of the CPU architecture includes: The VMM traverses a system register of each physical CPU in the CPU architecture to obtain the type information of each type of physical CPU; the VMM compares the CPU type information with a preset timer errata table, to obtain the first timer errata information corresponding to the CPU type information; and the VMM obtains an advanced configuration and power interface (advanced configuration and power interface, ACPI) table or a device tree (device tree, DT) table of firmware in the CPU architecture, reads a timer errata-related information field from the ACPI table or the DT table, and obtains the second timer errata information through parsing based on the timer errata-related information field.

According to the foregoing technical solution, the VMM traverses, at a back end, the system register of each physical CPU in the CPU architecture to read the type information of each type of physical CPU, thereby accurately maintaining all CPU type information in the CPU architecture. The VMM parses, at the back end, the ACPI table or the DT table of the firmware in the CPU architecture, to identify possible timer errata in the CPU architecture. As a supplement, possible timer errata in the CPU architecture are identified based on the CPU type information. In this way, timer errata information in the CPU architecture is comprehensively collected. All CPU type information and all timer errata information in the CPU architecture that are maintained at the back end are shared with the VM at the front end, so that the VM may accurately identify all possible errata in the CPU architecture. Firmware construction of the VM is decoupled from timer errata identification (that is, timer errata identification does not rely on firmware of the VM), so that when new timer errata appear, construction code of the firmware of the VM does not need to be modified.

In some embodiments, a shared storage area that both the VM and the VMM have access permission is configured on the electronic device, and the sharing the errata-related information with the VM includes: The VMM writes the errata-related information into the shared storage area, and the VM reads the errata-related information from the shared storage area.

According to the foregoing technical solution, the shared storage area is disposed to implement communication between the VM and the VMM, so that information maintained by the VMM at the back end may be shared with the VM at the front end, and information maintained by the VM at the front end may be shared with the VMM at the back end. For example, the VMM may write information to be shared with the VM into the shared storage area, and the VM reads, from the shared storage area, the information written by the VMM; and the VM may write information to be shared with the VMM into the shared storage area, and the VMM reads, from the shared storage area, the information written by the VM.

In some embodiments, that the VM identifies, based on the errata-related information, errata in the CPU architecture includes: The VM compares the CPU type information with a preset CPU errata table, to obtain CPU errata in the CPU architecture; and the VM obtains, based on the timer errata information, timer errata in the CPU architecture.

According to the foregoing technical solution, the VM may accurately identify, based on the errata-related information shared by the VMM, CPU errata and timer errata in the CPU architecture, so that the VM may smoothly process all CPU errata and timer errata in the heterogeneous CPU architecture, thereby improving running stability of a service in the VM.

In some embodiments, a guest operating system (guest operating system, guest OS) is carried on the VM, and the identified errata include static management type errata and dynamic management type errata. That the VM performs repair processing on the identified errata includes: When the guest OS of the VM runs errata processing logic of first errata, the first errata are the static management type errata, and it is determined that the first errata exist in the CPU architecture, the VM executes errata repair logic of the first errata, to repair the first errata; when the guest OS of the VM runs errata processing logic of first errata, the first errata are the dynamic management type errata, and it is determined that the first errata exist in the CPU architecture, the VM executes errata repair logic of the first errata, to repair the first errata; and when the guest OS of the VM runs errata processing logic of first errata, the first errata are the dynamic management type errata, and it is determined that the first errata do not exist in the CPU architecture, the VM executes non-repair logic of the first errata.

According to the foregoing technical solution, errata may be classified based on a type, and may include CPU errata, timer errata, and the like. The errata may be further classified based on a management manner, and may be classified into two types based on different management manners: static management type errata and dynamic management type errata. An operating system (which may also be referred to as a host OS) of the electronic device and the gust OS of the VM may include errata processing logic of various errata. The gust OS of the VM is used as an example. For static management type errata, when the guest OS of the VM runs errata processing logic of specific errata, if the errata exist in the CPU architecture, errata repair logic may be directly executed. For dynamic management type errata, when the guest OS of the VM runs errata processing logic of specific errata, it may be determined, based on the CPU type information of the CPU architecture, whether to execute errata repair logic. For example, it is determined, based on the CPU type information, that the errata exist in the CPU architecture, and errata repair logic is executed to repair the errata. If it is determined that the errata do not exist in the CPU architecture, non-repair logic is executed, that is, the errata are not repaired, thereby avoiding executing redundant errata repair logic, and improving performance of the VM.

In some embodiments, the VM further includes a dynamic errata management switch. That when the guest OS of the VM runs errata processing logic of first errata, the first errata are the dynamic management type errata, and it is determined that the first errata exist in the CPU architecture, the VM executes errata repair logic of the first errata includes: When the guest OS of the VM runs the errata processing logic of the first errata, the first errata are the dynamic management type errata, it is determined that the first errata exist in the CPU architecture, and the dynamic errata management switch is in a disabled state, the VM executes the errata repair logic of the first errata. That when the guest OS of the VM runs errata processing logic of first errata, the first errata are the dynamic management type errata, and it is determined that the first errata do not exist in the CPU architecture, the VM executes non-repair logic of the first errata includes: When the guest OS of the VM runs the errata processing logic of the first errata, the first errata are the dynamic management type errata, it is determined that the first errata do not exist in the CPU architecture, and the dynamic errata management switch is in the disabled state, the VM executes the non-repair logic of the first errata.

According to the foregoing technical solution, the dynamic errata management switch may be disposed in the VM to choose whether to enable a dynamic errata processing mechanism. For example, the VM may set the dynamic errata management switch to the disabled state or an enabled state in response to a user operation. If the dynamic errata management switch is set to the disabled state, when the guest OS of the VM runs errata processing logic of specific dynamic management type errata, it may be determined, based on the CPU type information, whether to execute errata repair logic. If it is determined, based on the CPU type information, that the dynamic management type errata exist in the CPU architecture, errata repair logic is executed; or if it is determined, based on the CPU type information, that the dynamic management type errata do not exist in the CPU architecture, non-repair logic is executed.

In some embodiments, the VM further includes a dynamic errata management switch, the dynamic errata management switch is in an enabled state, and the method for processing errata by a virtual machine further includes: The VMM obtains type information of a physical CPU in which a VCPU thread of the VM is located, and shares, with the VM, the type information of the physical CPU in which the VCPU thread is located, and the VM may further perform errata repair processing based on the type information of the physical CPU in which the VCPU thread is located.

According to the foregoing technical solution, if the dynamic errata management switch is set to the enabled state, the type information of the physical CPU in which the VCPU thread is located is obtained in real time, and it is determined, based on the type information of the physical CPU in which the VCPU thread is located, whether to execute errata repair logic, thereby avoiding executing redundant errata repair logic, and further improving performance of the VM.

In some embodiments, a guest OS is carried on the VM, and the identified errata include static management type errata and dynamic management type errata. That the VM performs repair processing on the identified errata includes: When the guest OS of the VM runs errata processing logic of second errata, the second errata are the static management type errata, and it is determined that the second errata exist in the CPU architecture, the VM executes errata repair logic of the second errata, to repair the second errata; when the guest OS of the VM runs errata processing logic of second errata, the second errata are the dynamic management type errata, and it is determined, based on the type information of the physical CPU in which the VCPU thread is located, that the second errata exist in the CPU in which the VCPU thread is located, the VM executes errata repair logic of the second errata, to repair the second errata; and when the guest OS of the VM runs errata processing logic of second errata, the second errata are the dynamic management type errata, and it is determined, based on the type information of the physical CPU in which the VCPU thread is located, that the second errata do not exist in the CPU in which the VCPU thread is located, the VM executes non-repair logic of the second errata.

According to the foregoing technical solution, errata may be classified based on a type, and may include CPU errata, timer errata, and the like. The errata may be further classified based on a management manner, and may be classified into two types based on different management manners: static management type errata and dynamic management type errata. A host OS of the electronic device and the gust OS of the VM may include errata processing logic of various errata. The gust OS of the VM is used as an example. For static management type errata, when the guest OS of the VM runs errata processing logic of specific errata, if the errata exist in the CPU architecture, errata repair logic may be directly executed. For dynamic management type errata, when the guest OS of the VM runs errata processing logic of specific dynamic management type errata, it may be determined, based on a type of a physical CPU in which a VCPU thread is currently located, whether to execute errata repair logic. For example, the type of the physical CPU in which the VCPU thread is currently located is obtained, and it is determined, based on the type of the physical CPU, whether the dynamic management type errata exist in that type of physical CPU. If it is determined that the dynamic management type errata do not exist in that type of physical CPU, non-repair logic is executed; or if it is determined that the dynamic management type errata exist in that type of physical CPU, errata repair logic is executed, thereby avoiding executing redundant errata repair logic, and improving performance of the VM.

In some embodiments, the method for processing errata by a virtual machine further includes: The VM shares a second errata processing context with the VMM, and the VMM manages, based on the second errata processing context, scheduling of the VCPU thread of the VM.

According to the foregoing technical solution, an errata processing context of a VCPU thread is maintained in real time at the front end, and is shared with the VMM at the back end, so that when determining that the VCPU thread is in errata processing logic, the VMM prohibits cross-type CPU scheduling of the VCPU thread, or prohibits CPU scheduling of the VCPU thread, thereby ensuring that the VCPU thread correctly processes errata, and preventing the VCPU thread from being scheduled, when processing non-modification logic of specific errata, to another CPU with the errata, to avoid causing an errata processing logic error and affecting normal running of the VM.

In some embodiments, that the VMM manages, based on the second errata processing context, scheduling of the VCPU thread of the VM includes: The VMM prohibits, based on the second errata processing context, cross-type CPU scheduling of the VCPU thread of the VM; or the VMM prohibits, based on the second errata processing context, CPU scheduling of the VCPU thread of the VM.

According to the foregoing technical solution, when determining that the VCPU thread is in errata processing logic, the VMM prohibits cross-type CPU scheduling of the VCPU thread, but allows same-type CPU scheduling; or directly prohibits CPU scheduling of the VCPU thread (that is, same-type CPU scheduling is also not allowed), thereby ensuring that the VCPU thread correctly processes errata.

In some embodiments, the method for processing errata by a virtual machine further includes: When processing of the second errata is completed, the VM shares a second errata processing completion context with the VMM; and the VMM restores CPU scheduling permission of the VCPU thread of the VM based on the second errata processing completion context.

According to the foregoing technical solution, after the VCPU thread completes errata processing, the VMM determines that the VCPU thread is not in errata processing logic, and restores free CPU scheduling permission of the VCPU thread of the VM, to implement global CPU resource scheduling and management for the VM. In this way, CPU resources of the CPU architecture may be fully used, a balance between computing power and power consumption of the CPU architecture may be fully utilized, and operation and maintenance of the VM may be flexibly supported, thereby improving experience of an application deployed on the VM.

According to a second aspect, an embodiment of this application provides a computer-readable storage medium, including computer instructions. When the computer instructions are run on an electronic device, the electronic device is enabled to perform the method for processing errata by a virtual machine according to the first aspect.

According to a third aspect, an embodiment of this application provides an electronic device. The electronic device includes a processor and a storage, the storage is configured to store instructions, and the processor is configured to invoke the instructions in the storage, so that the electronic device performs the method for processing errata by a virtual machine according to the first aspect.

According to a fourth aspect, an embodiment of this application provides a computer program product. When the computer program product is run on an electronic device (for example, a computer), the electronic device is enabled to perform the method for processing errata by a virtual machine according to the first aspect.

According to a fifth aspect, an apparatus is provided, and the apparatus has a function of implementing behavior of the electronic device in the method provided in the first aspect. The function may be implemented by hardware, or may be implemented by executing corresponding software by hardware. The hardware or the software includes one or more modules corresponding to the foregoing function.

It may be understood that the computer-readable storage medium according to the second aspect, the electronic device according to the third aspect, the computer program product according to the fourth aspect, and the apparatus according to the fifth aspect all correspond to the method in the first aspect. Therefore, for beneficial effects that can be achieved by the computer-readable storage medium, the electronic device, the computer program product, and the apparatus, refer to the beneficial effects in the corresponding method provided above. Details are not described herein again.

### BRIEF DESCRIPTION OF DRAWINGS

FIG. 1 is a diagram of a system architecture for CPU resource management of a virtual machine of a heterogeneous CPU architecture according to an embodiment of this application;
FIG. 2 is a diagram of a structure of an electronic device according to an embodiment of this application;
FIG. 3 is a diagram of a software structure of an electronic device according to an embodiment of this application;
FIG. 4 is a diagram of an application architecture of a method for processing errata by a virtual machine according to an embodiment of this application;
FIG. 5a is a diagram of a system architecture in which a virtual machine deployed on an electronic device performs errata processing according to an embodiment of this application;
FIG. 5b is a diagram of a system architecture in which a virtual machine deployed on an electronic device performs errata processing according to another embodiment of this application;
FIG. 6 is a diagram of interaction between a virtual machine and a virtual machine monitor that are deployed on an electronic device according to an embodiment of this application;
FIG. 7 is a diagram of interaction between a virtual machine and a virtual machine monitor that are deployed on an electronic device according to another embodiment of this application; and
FIG. 8 is a schematic flowchart of steps of a method for processing errata by a virtual machine according to an embodiment of this application.

### DESCRIPTION OF EMBODIMENTS

It should be noted that, in this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and the like (if existing) are intended to distinguish between similar objects but do not indicate a specific order or sequence.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

Operating system (Operating System, OS): is a computer program that manages computer hardware and software resources.

Process: is a running activity that is of a program with an independent function and that is about a data set. A process is a basic unit dynamically executed by an operating system. In a conventional operating system, a process is not only a basic allocation unit, but also a basic execution unit. A process may be considered as an instance of a running program.

Thread: is a minimum unit on which an operating system can perform operation scheduling. A thread is included in a process, and is an actual operating unit in the process. One thread is one control flow in a single order in a process. One process may have a plurality of concurrent threads, and the threads execute different tasks in parallel.

Errata (Errata): are defects that are found after a hardware design is completed and that may cause hardware to deviate from an architecture and be unable to work properly in some specific functions in specific cases, and are similar to bugs in a software program. An operating system needs to perform special processing on errata, for example, executing a specific code segment or configuring hardware in a specific manner.

Virtualization (virtualization): is a resource management technology, in which various physical resources of a host, such as network resources, memory resources, and storage resources, are abstracted, converted, and then presented, to break inseparable obstacles between physical structures of the host, so that a user may use these resources in a better manner than an original configuration. A resource used through virtualization is referred to as a virtualized resource. The virtualized resource is not limited by a deployment manner, a region, or a physical configuration of an existing resource. Generally, virtualized resources include computing resources and storage resources.

Virtual machine (virtual machine, VM): is one or more virtual computers obtained through simulation on a physical computer through software. The virtual machine runs in a completely isolated environment, and works like a real computer. A guest operating system (guest operating system, guest OS) may be installed on the virtual machine, and one or more applications run on the guest operating system. The virtual machine may further access a network resource. The application running on the virtual machine operates like that on the real computer.

Host (host) layer: is used as a management layer, and is used to manage and allocate a hardware resource, present a virtual hardware platform for a virtual machine, schedule and isolate a virtual machine, and the like. In some implementations, the host layer includes a host operating system (host operating system, host OS) and a virtual monitoring apparatus, for example, a VMM or a hypervisor. The virtual monitoring apparatus may be deployed inside the host operating system, or may be deployed outside the host operating system. In some other implementations, the "host layer" may further include one privileged virtual machine (for example, a virtualization architecture Xen). The virtual hardware platform provides virtual computers running on the virtual hardware platform with various hardware resources, such as a virtual processor, a virtual memory, a virtual disk, and a virtual network interface card. The virtual computers run on the virtual hardware platform prepared by the host layer for the virtual computers. In this application, the host layer is sometimes referred to as the host for short.

Hardware layer: is a hardware platform that runs in a virtualized environment. The hardware layer may include a plurality of types of hardware. For example, a hardware layer of a physical computer may include a processor and a storage, and may further include an interrupt controller, a network interface card (network interface card, NIC), an input/output (input/output I/O) device, and the like.

Physical processor: is a physical processing unit in this application, and may be specifically a minimum processing unit, for example, including one physical core. In some embodiments, the physical processor may alternatively be a processing unit including a plurality of physical cores.

Virtual processor: represents a physical processing unit provided, in a shared or fragmented manner in a virtualization technology, for a virtual computer to use, such as a virtual CPU (virtual central processing unit, VCPU). One virtual computer may have one or more virtual processors serving the virtual computer. When there are a plurality of virtual processors, one virtual processor is usually a primary virtual processor, and the others are secondary virtual processors.

One or more virtual machines may be created on a host. Errata management systems may be deployed in both a host OS of the host and a gust OS of the virtual machine. The errata management systems may identify and repair errata in a CPU architecture (a homogeneous CPU architecture or a heterogeneous CPU architecture) of the host, to ensure normal running of the host. For example, in a running process of the host OS, an errata management system in the host OS of the host may identify and repair errata in the CPU architecture; and in a running process of the gust OS, an errata management system in the gust OS of the virtual machine may identify and repair errata in the CPU architecture, to ensure normal running of the virtual machine.

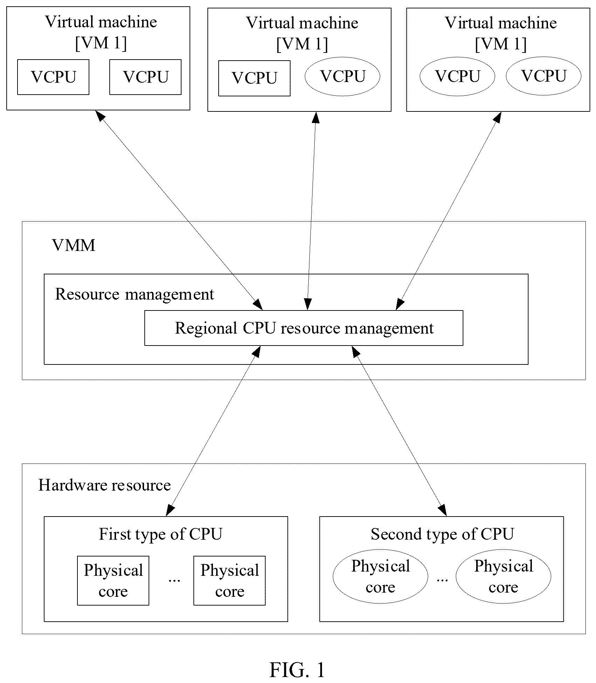

For the virtual machine, when the errata management system in the gust OS performs non-repair processing on errata that do not exist in a specific type of CPU, a VCPU thread may be scheduled to another CPU with the errata, thereby causing an errata processing logic error and affecting normal running of a service in the virtual machine. To resolve this problem, VCPU and core binding may be used. As shown in FIG. 1, it is assumed that an electronic device includes two types of CPUs (a first type of CPU and a second type of CPU), virtual machines VM 1 and VM 3 are homogeneous-core virtual machines, and a virtual machine VM 2 is a hybrid-core virtual machine. A VMM performs CPU resource management for each virtual machine. A policy based on VCPU and core binding can support only regional CPU resource management. That is, in virtual machine design and initialization procedures, a VCPU type of a virtual machine is initialized in a fixed manner to one type of CPU or several types of CPUs in a heterogeneous CPU architecture. In an entire life cycle of the virtual machine and an operation and maintenance process of the virtual machine, scheduling and operation and maintenance of a VCPU of the virtual machine can only be performed within a specific type of CPU in initialized resource management, and global CPU resource management cannot be supported (scheduling cannot be performed between different types of CPUs). CPU resources of the heterogeneous CPU architecture cannot be fully used, global scheduling cannot be flexibly performed based on application loads, a balance between computing power and power consumption of the heterogeneous CPU architecture cannot be utilized, and operation and maintenance of the virtual machine cannot be flexibly supported, thereby affecting experience of an application deployed on the virtual machine. In addition, the foregoing solution also has a problem of incomplete errata identification. As a result, an errata management system in the virtual machine cannot smoothly process all errata in the heterogeneous CPU architecture.

To resolve the foregoing technical problem, some embodiments of this application provide a method for processing errata by a virtual machine. All CPU type information and all timer errata information in a CPU architecture are maintained at a back end (a host OS) and shared with a virtual machine at a front end, so that an errata management system in the virtual machine may identify all possible CPU errata and all possible timer errata, thereby avoiding a problem that the errata management system in the virtual machine cannot smoothly process all errata in the heterogeneous CPU architecture due to incomplete errata identification. In addition, type information of a physical CPU in which a VCPU thread is located is maintained and updated in real time at the back end, and an errata processing context of the VCPU thread is maintained at the front end, so that when the VCPU thread is in errata processing logic, cross-type CPU scheduling of the VCPU thread is prohibited, and after errata processing is completed, free CPU scheduling permission of the VCPU thread is restored, to implement global CPU resource scheduling and management for each virtual machine. In this way, CPU resources of the heterogeneous CPU architecture may be fully used, a balance between computing power and power consumption of the heterogeneous CPU architecture may be fully utilized, and operation and maintenance of the virtual machine may be flexibly supported, thereby improving experience of an application deployed on the virtual machine.

The method for processing errata by a virtual machine provided in embodiments of this application may be applied to an electronic device, and the electronic device may communicate with another electronic device or a server by using a communication network. The electronic device in this application may include a server or a terminal device. The terminal device includes but is not limited to at least one of the following: a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a smart home device, and a smart city device. A specific type of the electronic device is not specially limited in embodiments of this application. The communication network may be a wired network, or a wireless network. For example, the communication network may be a local area network (local area network, LAN), or a wide area network (wide area network, WAN), for example, the Internet. When the communication network is a local area network, for example, the communication network may be a short-range communication network, for example, a wireless fidelity (wireless fidelity, Wi-Fi) hotspot network, a Wi-Fi P2P network, a Bluetooth network, a ZigBee network, or a near field communication (near field communication, NFC) network. When the communication network is a wide area network, for example, the communication network may be a 3rd generation wireless telephone technology (3rd generation wireless telephone technology, 3G) network, a 4th generation mobile communication technology (4th generation mobile communication technology, 4G) network, a 5th generation mobile communication technology (5th generation mobile communication technology, 5G) network, a future evolved public land mobile network (public land mobile network, PLMN), or the Internet.

In some embodiments, one or more APPs (Application) may be installed on the electronic device. The APP may be briefly referred to as an application, and is a software program that can implement one or more specific functions, for example, a communication application, a video application, an audio application, an image shooting application, and a cloud desktop application. The communication application may include, for example, an SMS message application. The image shooting application may include, for example, a camera application (a system camera or a third-party camera application). The video application may include, for example, Huawei Video. The audio application may include, for example, Huawei Music. An application mentioned in the following embodiments may be a system application installed before the electronic device is delivered from a factory, or may be a third-party application downloaded by a user from a network or obtained by the user from another electronic device during use of the electronic device.

The electronic device includes but is not limited to carrying iOS^{®}, Android^{®} (Android^{®}), Windows Mobile^{®}, HarmonyOS^{®}, or another operating system. In embodiments of this application, an example in which the Android^{®} operating system or the HarmonyOS^{®} operating system is carried on the electronic device is used for description.

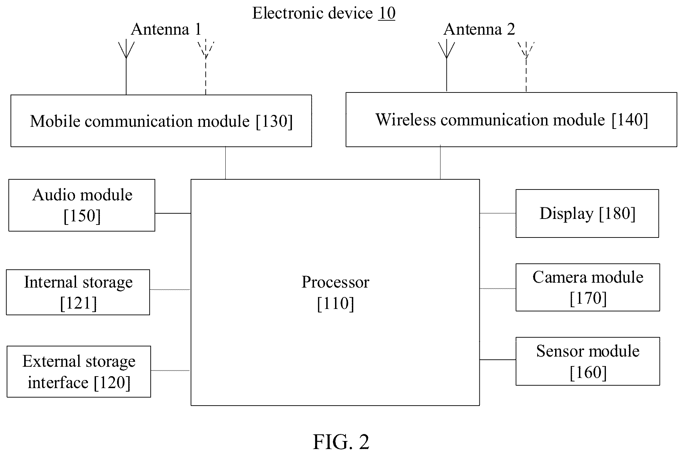

FIG. 2 is a diagram of a structure of an electronic device 10.

The electronic device 10 may include a processor 110, an external storage interface 120, an internal storage 121, an antenna 1, an antenna 2, a mobile communication module 130, a wireless communication module 140, an audio module 150, a sensor module 160, a camera module 170, a display 180, and the like.

It may be understood that the structure shown in this embodiment of this application does not constitute a specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A storage may be further disposed in the processor 110, and is configured to store instructions and data. In some embodiments, the storage in the processor 110 may be a cache. The storage may store instructions or data just used or frequently used by the processor 110. If the processor 110 needs to use the instructions or the data, the processor 110 may directly invoke the instructions or the data from the storage. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module like an audio module, a wireless communication module, a display, and a camera through at least one of the foregoing interfaces.

It may be understood that an interface connection relationship between modules illustrated in this embodiment of this application is merely an example for description, and does not constitute a limitation on the structure of the electronic device 10. In some other embodiments of this application, the electronic device 10 may alternatively use an interface connection manner different from that in the foregoing embodiment, or a combination of a plurality of interface connection manners.

A wireless communication function of the electronic device 10 may be implemented through the antenna 1, the antenna 2, the mobile communication module 130, the wireless communication module 140, the modem processor, the baseband processor, and the like.

The mobile communication module 130 may provide a wireless communication solution that includes 2G/3G/4G/5G or the like and that is applied to the electronic device 10. The mobile communication module 130 may include at least one filter, a switch, a power amplifier, a low noise amplifier (low noise amplifier, LNA), and the like. In some embodiments, at least some functional modules of the mobile communication module 130 may be disposed in the processor 110. In some embodiments, at least some functional modules of the mobile communication module 130 may be disposed in a same device as at least some modules of the processor 110.

The wireless communication module 140 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 10. The wireless communication module 140 may be one or more components integrating at least one communication processing module.

In some embodiments, the electronic device 10 may communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 10 may implement a display function through the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs, which execute program instructions to generate or change display information.

The camera module 170 includes a camera. The display 180 is configured to display an image, a video, and the like. The display 180 may be a touchscreen. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 10 may include one or more displays 180.

The external storage interface 120 may be configured to connect to an external storage card, for example, a micro SD card, to extend a storage capability of the electronic device 10. The external storage card communicates with the processor 110 through the external storage interface 120, to implement a data storage function.

The internal storage 121 may be configured to store computer-executable program code. The executable program code includes instructions. The internal storage 121 may include a program storage area and a data storage area. The program storage area may store an operating system, an application required by at least one function (for example, a voice playing function or an image playing function), and the like. The data storage area may store data created during use of the electronic device 10, and the like. In addition, the internal storage 121 may include a highspeed random access memory, or may include a nonvolatile memory, for example, at least one magnetic disk storage device, a flash memory, or a universal flash storage (universal flash storage, UFS). The processor 110 runs the instructions stored in the internal storage 121, and/or the instructions stored in the storage disposed in the processor, to perform various function methods or data processing of the electronic device 10.

The audio module 150 is configured to convert digital audio information into an analog audio signal for output, and is also configured to convert analog audio input into a digital audio signal. The audio module 150 may be further configured to encode and decode an audio signal. In some embodiments, the audio module 150 may be disposed in the processor 110, or some functional modules of the audio module 150 are disposed in the processor 110.

A software system of the electronic device 10 may use a layered architecture, an event-driven architecture, a microkernel architecture, a microservice architecture, or a cloud architecture. In embodiments of this application, an Android system with a layered architecture is used as an example to describe a software structure of the electronic device 10.

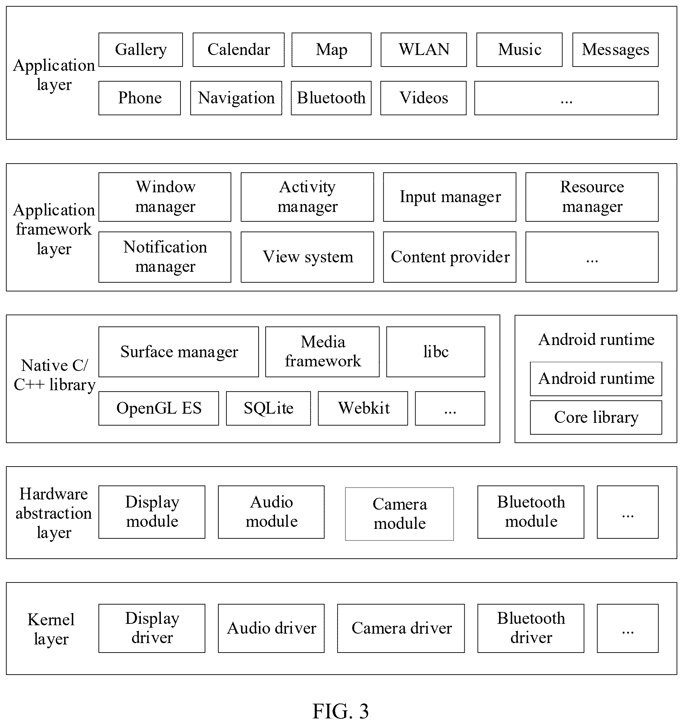

FIG. 3 is a block diagram of a software structure of the electronic device 10 according to an embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, surface management, and as a transit point for an input system.

The content provider is configured to: store and obtain data, and enable the data to be accessed by an application. The data may include a video, an image, audio, calls that are made and answered, a browsing history and a bookmark, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the electronic device vibrates, or an indicator light blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager may provide an input manager service (Input Manager Service, IMS). The IMS may be used to manage system input, for example, touchscreen input, key input, and sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides an API for a user to develop an Android application.

The native C/C++ library may include a plurality of functional modules, such as a surface manager (surface manager), a media framework (Media Framework), libc, OpenGL ES, SQLite, and Webkit.

The surface manager is configured to: manage a display subsystem, and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 10.

The hardware abstraction layer runs in user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

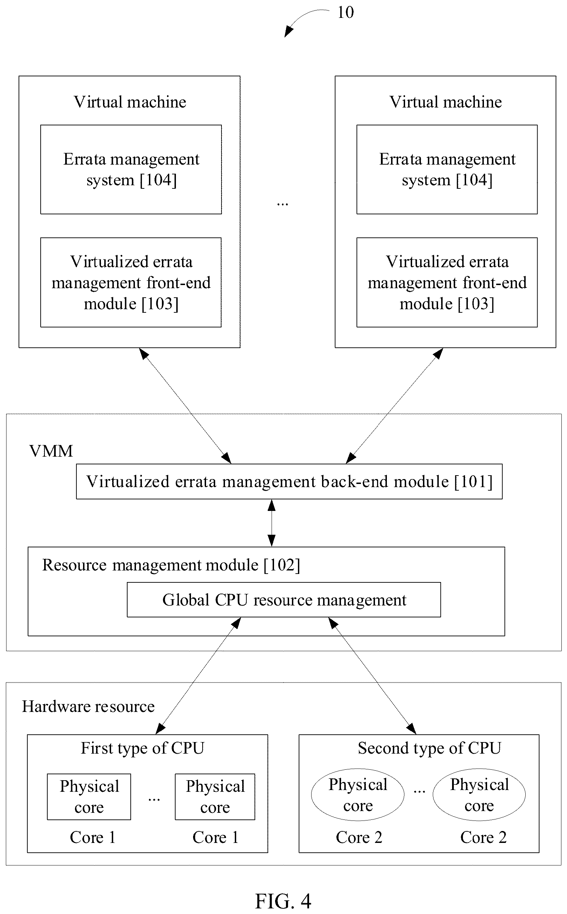

With reference to FIG. 4, the following describes an example of a diagram of an application architecture of a method for processing errata by a virtual machine.

In this embodiment, the application architecture may include a hardware layer and a software layer. The hardware layer may include one or more hardware resources. In FIG. 4, an example in which the hardware layer includes a CPU resource is used for description. It is assumed that an electronic device 10 includes CPUs of two architectures (referred to as a first type of CPU and a second type of CPU below for ease of distinguishing). The first type of CPU may include one or more physical cores 1, and the second type of CPU may include one or more physical cores 2. The electronic device 10 may be a terminal device or a server. This is not limited in this embodiment of this application.

The software layer may include one or more virtual machines and a VMM that manages the one or more virtual machines. The VMM may be a type-1 VMM (Type-1 VMM), a type-2 VMM (Type-2 VMM), or the like. This is not limited in this application. In FIG. 4, an example in which the software layer includes a plurality of virtual machines is used. Modules/units in embodiments of this application may be a series of computer program instruction segments that can complete a specific function, or may be functional modules formed by cooperating with hardware in a computer program instruction segment. Division into the modules is logical function division and may be other division in actual implementation. This is not limited in this application.

The VMM may include a virtualized errata management back-end module 101 and a resource management module 102. The virtualized errata management back-end module 101 is configured to collect CPU type information and timer errata information. The CPU type information and the timer errata information may be presented and stored in a manner of an array, a linked list, a bitmap, or the like. This is not limited in this application. For example, the virtualized errata management back-end module 101 may collect CPU type information by traversing all CPUs in the electronic device 10 and reading a system register of each CPU. The virtualized errata management back-end module 101 may further identify existing timer errata by reading a timer errata-related information field and identify existing timer errata based on the CPU type information, to comprehensively collect timer errata information. For example, for firmware of an advanced configuration and power interface (advanced configuration and power interface, ACPI) type (firmware used by a CPU architecture of a host, which is configured by a device vendor before the electronic device is delivered from a factory), the virtualized errata management back-end module 101 may obtain a timer errata-related information field from an ACPI table by parsing the ACPI table, to identify existing timer errata; and for firmware of a device tree (device tree, DT) type (firmware used by the CPU architecture of the host), the virtualized errata management back-end module 101 may obtain a timer errata-related information field from a DT table by parsing the DT table, to identify existing timer errata.

The resource management module 102 is configured to perform resource scheduling and management on each virtual machine, for example, perform CPU resource scheduling and management on each virtual machine.

Each virtual machine may include a virtualized errata management front-end module 103 and an errata management system 104. The virtualized errata management front-end module 103 is configured to obtain the CPU type information and the timer errata information that are collected by the virtualized errata management back-end module 101, and identify, based on the CPU type information and the timer errata information, errata (CPU errata and timer errata) existing in a heterogeneous CPU architecture. The errata management system 104 is configured to: when identifying errata in the heterogeneous CPU architecture or a specific type of CPU, invoke the virtualized errata management front-end module 103 to perform errata identification. The errata management system 104 is further configured to perform repair processing or non-repair processing on errata.

In some embodiments, performing repair processing on errata may be executing errata repair logic to repair the errata, and performing non-repair processing on errata may be executing non-repair logic (not to repair the errata).

For example, CPU errata exist when data stored in a cache (cache) in a CPU is erased. If an erase instruction is executed once, the data may not be completely erased. Repair logic of the CPU errata is to execute a second erase instruction.

For example, timer errata exist when data of a count is read from a timer. If the data is read once, read data may be inaccurate. Repair logic of the CPU errata is to read the data for a plurality of times (for example, read the data for three times).

In some embodiments, the virtualized errata management front-end module 103 may alternatively be integrated into the errata management system 104. This is not limited in this application. Errata repair logic and non-repair logic may be a series of computer program instruction segments. Specific code content of the computer program instruction segments is not limited in this application.

In some embodiments, the virtualized errata management back-end module 101 is further configured to maintain, in real time, type information of a physical CPU in which a VCPU thread of the virtual machine is located. The virtualized errata management front-end module 103 may obtain the type information that is maintained by the virtualized errata management back-end module 101 and that is of the physical CPU in which the VCPU thread of the virtual machine is currently located. Before processing specific errata, the errata management system 104 may determine, based on the type information of the physical CPU in which the VCPU thread is located, whether to execute errata repair logic or non-repair logic. For example, before processing first errata, the errata management system 104 determines, based on the type information of the physical CPU in which the VCPU thread is located, all errata in that type of physical CPU. If the first errata exist in that type of physical CPU, errata repair logic is executed (to repair the first errata); or if the first errata do not exist in that type of physical CPU, non-repair logic is executed (that is, the first errata are not repaired).

In some embodiments, in a process in which the errata management system 104 processes specific errata, the virtualized errata management front-end module 103 is further configured to maintain an errata processing context. The virtualized errata management back-end module 101 may obtain the errata processing context maintained by the virtualized errata management front-end module 103, and manage scheduling of the VCPU thread of the virtual machine. For example, the virtualized errata management back-end module 101 determines, based on the errata processing context, that the virtual machine is in errata processing logic, and prohibits cross-type physical CPU scheduling of the VCPU thread of the virtual machine.

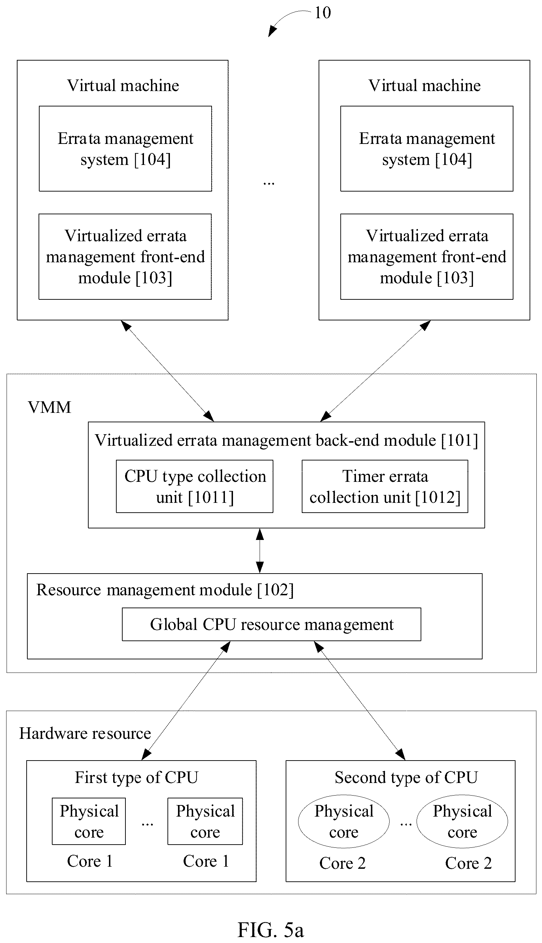

As shown in FIG. 5a, an example in which the software layer includes a virtual machine and a VMM that manages the virtual machine is used for description. A CPU architecture of the electronic device 10 may be a heterogeneous CPU architecture or a homogeneous CPU architecture.

The virtualized errata management back-end module 101 may include a CPU type collection unit 1011 and a timer errata collection unit 1012. The CPU type collection unit 1011 is configured to collect CPU type information. For example, the CPU type collection unit 1011 may collect CPU type information by traversing all CPUs in the electronic device 10 and reading a system register of each CPU. The timer errata collection unit 1012 is configured to collect timer errata information. For example, the timer errata collection unit 1012 may identify existing timer errata by parsing an ACPI table or a DT table of firmware of the CPU architecture, and reading a timer errata-related information field from the ACPI table or the DT table. The timer errata collection unit 1012 further identifies existing timer errata based on the CPU type information, for example, traverses a timer errata table (the timer errata table may store timer errata corresponding to each CPU type) in a CPU timer driver based on the CPU type information, to identify existing timer errata.

The virtualized errata management front-end module 103 may obtain, through an information sharing channel, the CPU type information and the timer errata information that are collected by the CPU type collection unit 1011 and the timer errata collection unit 1012. The information sharing channel may be a channel for implementing information exchange between the virtualized errata management front-end module 103 and the virtualized errata management back-end module 101.

In some embodiments, the information sharing channel between the virtualized errata management front-end module 103 and the virtualized errata management back-end module 101 may be constructed based on a paravirtualization (paravirtualization, PV) technology. For example, the information sharing channel between the virtualized errata management front-end module 103 and the virtualized errata management back-end module 101 may be constructed based on a shared memory, a hypervisor call (HVC), or the like. The shared memory is used as an example. The virtualized errata management front-end module 103 may write information to be shared with the virtualized errata management back-end module 101 into the shared memory, and the virtualized errata management back-end module 101 reads, from the shared memory, the information shared by the virtualized errata management front-end module 103. Similarly, the virtualized errata management back-end module 101 may write information to be shared with the virtualized errata management front-end module 103 into the shared memory, and the virtualized errata management front-end module 103 reads, from the shared memory, the information shared by the virtualized errata management back-end module 101.

The virtualized errata management front-end module 103 may identify, based on the CPU type information and the timer errata information, errata in the CPU architecture of the electronic device 10. When needing to perform errata identification, the errata management system 104 may invoke the virtualized errata management front-end module 103 to perform errata identification.

When a guest OS of the virtual machine runs errata processing logic of specific errata, the errata management system 104 may further determine, based on the CPU type information, whether to perform repair processing or non-repair processing on the errata. For example, if it is determined, based on the CPU type information, that the errata exist in the CPU architecture, repair processing is performed on the errata (errata repair logic is executed); or if it is determined, based on the CPU type information, that the errata do not exist in the CPU architecture, non-repair processing is performed on the errata (non-repair logic is executed).

In the foregoing solution, all CPU type information and all timer errata information in the CPU architecture are maintained at a back end and shared with the virtual machine at a front end, so that the errata management system in the virtual machine may identify all possible CPU errata and all possible timer errata, thereby avoiding a problem that the errata management system in the virtual machine cannot smoothly process all errata in the heterogeneous CPU architecture because the errata management system in the virtual machine cannot obtain all errata in the heterogeneous CPU architecture, and improving running stability of a service in the virtual machine. In addition, firmware construction of the virtual machine is decoupled from timer errata identification (timer errata identification does not rely on firmware of the virtual machine), so that when new timer errata appear, construction code of the firmware of the virtual machine does not need to be modified.

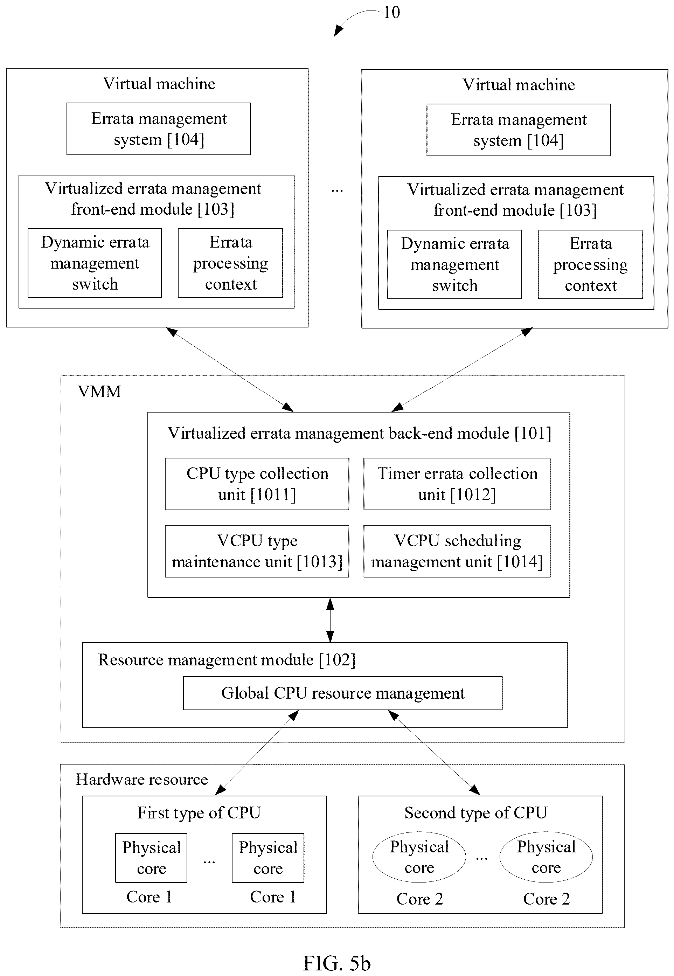

As shown in FIG. 5b, the application architecture provides a dynamic errata processing mechanism, and a dynamic errata management switch is used to choose whether to enable the dynamic errata processing mechanism. For example, the virtual machine may set the dynamic errata management switch to a disabled state or an enabled state in response to a user operation. The CPU architecture of the electronic device 10 is described by using a heterogeneous CPU architecture as an example.

The virtualized errata management back-end module 101 may include a CPU type collection unit 1011, a timer errata collection unit 1012, a VCPU type maintenance unit 1013, and a VCPU scheduling management unit 1014. Functions of the CPU type collection unit 1011 and the timer errata collection unit 1012 have been described in the foregoing embodiment, and are not described herein again. The VCPU type maintenance unit 1013 is configured to maintain type information of a physical CPU in which a VCPU thread of the virtual machine is located in real time. When the VCPU thread is scheduled to another CPU, the VCPU type maintenance unit 1013 may update, in real time, the type information of the physical CPU in which the VCPU thread is located. The VCPU scheduling management unit 1014 is configured to control scheduling of the VCPU thread, for example, when determining that the VCPU is in errata processing logic, prohibit cross-type CPU scheduling of the VCPU thread.

If the dynamic errata management switch is set to the disabled state, when the guest OS of the virtual machine runs errata processing logic of specific errata, all errata in the current heterogeneous CPU architecture may be determined based on CPU type information collected by the CPU type collection unit 1011. If the errata exist in the heterogeneous CPU architecture, errata repair logic is executed (to repair the errata); or if the errata do not exist in the heterogeneous CPU architecture, non-repair logic is executed (that is, the errata are not repaired). If the dynamic errata management switch is set to the enabled state, when the guest OS of the virtual machine runs errata processing logic of specific errata, type information of a physical CPU in which a VCPU thread is located is obtained in real time, and it is determined, based on the type information of the physical CPU in which the VCPU thread is located, whether to execute errata repair logic or non-repair logic. For example, all errata in that type of physical CPU are determined based on the type information of the physical CPU in which the VCPU thread is located. If the errata exist in that type of physical CPU, errata repair logic is executed (to repair the errata); or if the errata do not exist in that type of physical CPU, non-repair logic is executed (that is, the errata are not repaired). A host OS of the host may further determine, by obtaining whether the VCPU thread is in errata processing logic, whether to allow scheduling of the VCPU thread, for example, determine whether to allow the VCPU to be scheduled from the current type of physical CPU to another type of physical CPU. If it is determined that the VCPU thread is in errata processing logic, cross-type physical CPU scheduling of the VCPU thread is prohibited.

The virtualized errata management front-end module 103 is further configured to obtain the type information that is maintained by the VCPU type maintenance unit 1013 and that is of the physical CPU in which the VCPU thread of the virtual machine is located in real time. For example, the virtualized errata management front-end module 103 may obtain, by using a shared memory, the type information that is maintained by the VCPU type maintenance unit 1013 and that is of the physical CPU in which the VCPU thread of the virtual machine is located in real time. The errata management system 104 is further configured to: before processing errata, determine, based on the type information that is obtained by the virtualized errata management front-end module 103 and that is of the physical CPU in which the VCPU thread is currently located, whether to execute errata repair logic (to repair the errata) or execute non-repair logic (that is, not to repair the errata).

In some embodiments, the virtualized errata management front-end module 103 is further configured to maintain an errata processing context of the VCPU thread of the virtual machine. The errata processing context represents that the errata management system 104 is processing errata (executing errata repair logic or executing non-repair logic). The VCPU scheduling management unit 1014 may obtain the errata processing context from the virtualized errata management front-end module 103, then determine that the VCPU of the virtual machine is in errata processing logic, and prohibit cross-type physical CPU scheduling of the VCPU thread. For example, the VCPU scheduling management unit 1014 may obtain, by using the shared memory, the errata processing context maintained by the virtualized errata management front-end module 103.

In the foregoing solution, the type information of the physical CPU in which the VCPU thread is located and the errata processing context of the VCPU thread are maintained and updated in real time, so that when the VCPU thread is in errata processing logic, cross-type CPU scheduling is prohibited, and after errata processing is completed, free CPU scheduling of the VCPU thread is restored, to implement global CPU resource scheduling and management for each virtual machine. In this way, CPU resources of the heterogeneous CPU architecture may be fully used, a balance between computing power and power consumption of the heterogeneous CPU architecture may be fully utilized, and operation and maintenance of the virtual machine may be flexibly supported, thereby improving experience of an application deployed on the virtual machine. In addition, errata repair logic or non-repair logic is executed based on the type information of the physical CPU in which the VCPU thread is located in real time, thereby avoiding executing redundant errata repair logic, and improving performance of the virtual machine.

In some embodiments, for CPU errata and timer errata, the CPU errata and the timer errata may be further classified into two types based on different errata management manners: static management type errata and dynamic management type errata. That is, based on different errata management manners, some CPU errata and timer errata may be classified as static management type errata, and some CPU errata and timer errata may be classified as dynamic management type errata. In other embodiments, alternatively, all CPU errata and timer errata may be classified as dynamic management type errata, or all CPU errata and timer errata may be classified as static management type errata.

For static management type errata, unified errata repair may be performed. For example, when the gust OS is started, the virtual machine may identify and repair all static management type errata in the CPU architecture. Alternatively, when the guest OS of the virtual machine runs errata processing logic of specific static management type errata, if it is identified that the errata exist in the CPU architecture, errata repair logic is executed; or if it is identified that the errata do not exist in the CPU architecture, non-repair logic is executed.

For dynamic management type errata, when the guest OS of the virtual machine runs errata processing logic of specific errata, CPU type information of the CPU architecture needs to be detected in real time, to determine whether to execute errata repair logic. If the errata do not exist, non-repair logic is executed, thereby avoiding executing redundant errata repair logic, and improving performance of the virtual machine.

For example, in the solution shown in FIG. 5a, for static management type errata, when the gust OS is started, the virtual machine may uniformly identify and repair all static management type errata. Alternatively, when the guest OS of the virtual machine runs errata processing logic of specific errata (static management type errata), if it is identified that the errata exist in the CPU architecture, errata repair logic is executed; or if it is identified that the errata do not exist in the CPU architecture, non-repair logic is executed. For dynamic management type errata, when the guest OS of the virtual machine runs errata processing logic of specific errata (dynamic management type errata), it may be determined, based on an errata identification result of the virtualized errata management front-end module 103 (the virtualized errata management front-end module 103 may identify, based on the CPU type information and the timer errata information that are collected by the virtualized errata management back-end module 101, all errata in the CPU architecture), whether to execute errata repair logic or non-repair logic. For example, when the guest OS of the virtual machine runs errata processing logic of specific dynamic management type errata, if it is determined that the dynamic management type errata do not exist in the CPU architecture, non-repair logic is executed; and when the guest OS of the virtual machine runs errata processing logic of specific dynamic management type errata, if it is determined that the dynamic management type errata exist in the CPU architecture, errata repair logic is executed.

For example, in the solution shown in FIG. 5b, for static management type errata, when the gust OS is started, the virtual machine may uniformly identify and repair all static management type errata. Alternatively, when the guest OS of the virtual machine runs errata processing logic of specific errata, if it is identified that the errata exist in the CPU architecture, errata repair logic is executed; or if it is identified that the errata do not exist in the CPU architecture, non-repair logic is executed. For dynamic management type errata, when the guest OS of the virtual machine runs errata processing logic of specific errata, it may be determined, based on a type of a physical CPU in which a VCPU thread is currently located, whether to execute errata repair logic or non-repair logic. For example, when the guest OS of the virtual machine runs errata processing logic of specific dynamic management type errata, a type of a physical CPU in which a VCPU thread is currently located is obtained, so that all errata in that type of physical CPU may be determined based on the type of the physical CPU, and if it is determined that the dynamic management type errata do not exist in that type of physical CPU, non-repair logic is executed; and when the guest OS of the virtual machine runs errata processing logic of specific dynamic management type errata, if it is determined that the dynamic management type errata exist in that type of physical CPU, errata repair logic is executed.

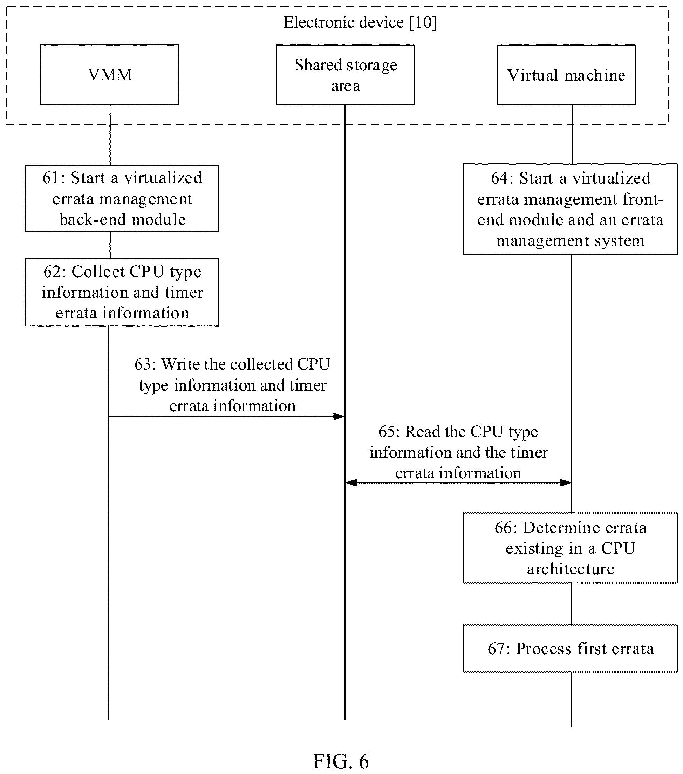

With reference to FIG. 6, the following describes an example of a diagram of interaction between a virtual machine and a VMM in an electronic device according to an embodiment of this application.

In this embodiment, a VMM and at least one virtual machine may be deployed at a software layer of an electronic device 10. A dynamic errata management switch is in a disabled state. A CPU architecture of the electronic device 10 may be a heterogeneous CPU architecture, or may be a homogeneous CPU architecture. This is not limited in this application. A process of interaction between the virtual machine and the VMM may include:

61: The VMM starts a virtualized errata management back-end module 101.

In some embodiments, the virtualized errata management back-end module 101 may be initialized and started based on a kernel-based virtual machine (kernel-based virtual machine, KVM).

62: The virtualized errata management back-end module 101 collects CPU type information and timer errata information.

In some embodiments, the CPU type information is types of all CPUs included in the CPU architecture. The virtualized errata management back-end module 101 may collect CPU type information by traversing all CPUs in the electronic device 10 and reading a system register of each CPU. The virtualized errata management back-end module 101 may further identify, based on a timer errata-related information field, timer errata in the CPU, by parsing an ACPI table or a DT table of firmware of the CPU architecture, and reading the timer errata-related information field from the ACPI table or the DT table. The virtualized errata management back-end module 101 may further identify, based on the CPU type information, timer errata in the CPU.

For example, a host OS and a gust OS may include CPU errata tables. The CPU errata tables record CPU errata in all types of CPUs. After the host OS or the gust OS is started, all CPU errata in a collected CPU type may be determined by comparing collected CPU type information with the CPU errata tables. CPU timer drivers of the host OS and the gust OS may include timer errata tables. All timer errata in a collected CPU type may be determined by comparing collected CPU type information with the timer errata tables. An ACPI table or a DT table of firmware used by a CPU architecture of a host may also record timer errata information. A timer errata-related information field is read from the ACPI table or the DT table, and existing timer errata are identified based on the timer errata-related information field. The foregoing two manners are used to identify timer errata, so that all timer errata in the CPUs may be identified.

63: The virtualized errata management back-end module 101 writes the collected CPU type information and timer errata information into a shared storage area.

In some embodiments, the shared storage area may be a storage area that may be accessed by both the virtual machine and the host. Both the virtualized errata management back-end module 101 and a virtualized errata management front-end module 103 may write information into the shared storage area, or read information from the shared storage area. For example, the shared storage area may be disposed on a memory or a magnetic disk of the electronic device 10.

64: The virtual machine starts a virtualized errata management front-end module 103 and an errata management system 104.

In some embodiments, the virtualized errata management front-end module 103 may be initialized and started based on the KVM.

In some embodiments, the errata management system 104 may alternatively be started along with the gust OS of the virtual machine.

In FIG. 6, interaction step 64 and interaction step 61 may be performed in parallel, or may be performed in a sequence. This is not limited in this embodiment of this application.

65: The virtualized errata management front-end module 103 reads the CPU type information and the timer errata information from the shared storage area.

66: The virtualized errata management front-end module 103 determines, based on the CPU type information and the timer errata information, errata (CPU errata and timer errata) existing in the CPU architecture.

67: When the guest OS of the virtual machine runs errata processing logic of first errata, the errata management system 104 processes the first errata based on an errata identification result of the virtualized errata management front-end module 103.

In some embodiments, the processing the first errata may include: executing errata repair logic to repair the first errata, or executing non-repair logic to skip repairing the first errata. For example, if it is determined that the first errata exist in the CPU architecture, errata repair logic is executed to repair the first errata; or if it is determined that the first errata do not exist in the CPU architecture, non-repair logic is executed.

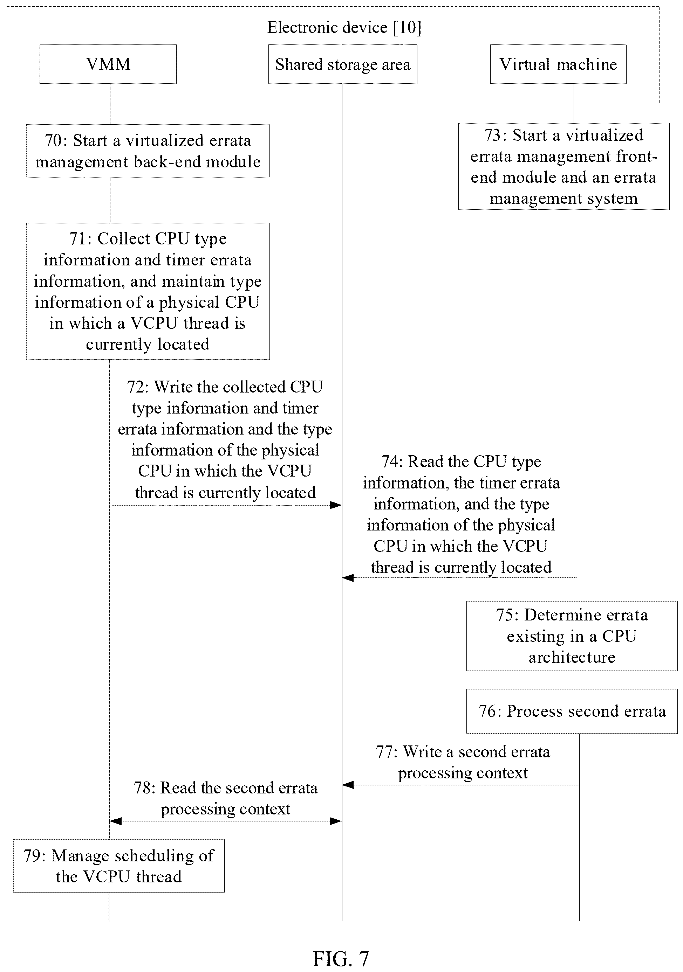

With reference to FIG. 7, the following describes an example of a diagram of interaction between a virtual machine and a VMM according to another embodiment of this application.

In this embodiment, a VMM and at least one virtual machine may be deployed at a software layer of an electronic device 10. A dynamic errata management switch is in an enabled state. A CPU architecture of the electronic device 10 may be a heterogeneous CPU architecture, or may be a homogeneous CPU architecture. This is not limited in this application. A process of interaction between the virtual machine and the VMM may include:

70: The VMM starts a virtualized errata management back-end module 101.

71: The virtualized errata management back-end module 101 collects CPU type information and timer errata information, and maintains type information of a physical CPU in which a VCPU thread of the virtual machine is currently located.

In some embodiments, the type information of the physical CPU in which the VCPU thread is currently located is a type of the CPU in which the VCPU thread is currently located. The virtualized errata management back-end module 101 maintains type information of a physical CPU in which a VCPU thread of the virtual machine is located in real time. When the VCPU thread is scheduled to another CPU, the virtualized errata management back-end module 101 may update, in real time, the type information of the physical CPU in which the VCPU thread is located.

72: The virtualized errata management back-end module 101 writes the collected CPU type information and timer errata information and the type information of the physical CPU in which the VCPU thread is currently located into a shared storage area.

73: The virtual machine starts a virtualized errata management front-end module 103 and an errata management system 104.

In FIG. 7, interaction step 70 and interaction step 73 may be performed in parallel, or may be performed in a sequence. This is not limited in this embodiment of this application.

74: The virtualized errata management front-end module 103 reads, from the shared storage area, the CPU type information, the timer errata information, and the type information of the physical CPU in which the VCPU thread is currently located.

75: The virtualized errata management front-end module 103 determines, based on the CPU type information and the timer errata information, errata (CPU errata and timer errata) existing in the CPU architecture.

76: When a guest OS of the virtual machine runs errata processing logic of second errata, the errata management system 104 processes the second errata based on the type information of the physical CPU in which the VCPU thread is currently located.

In some embodiments, the processing the second errata may include: executing errata repair logic to repair the second errata, or executing non-repair logic to skip repairing the second errata. For example, all errata in the CPU architecture may be determined based on the CPU type information and the timer errata information, and all errata in the type of CPU in which the VCPU is located may be further determined based on the type information of the physical CPU in which the VCPU thread is currently located. If it is determined that the second errata exist in the type of CPU in which the VCPU is located, errata repair logic is executed to repair the second errata; or if it is determined that the second errata do not exist in the type of CPU in which the VCPU is located, non-repair logic is executed.

77: The virtualized errata management front-end module 103 writes a second errata processing context into the shared storage area.

In some embodiments, the second errata processing context represents that the errata management system 104 is processing second errata (executing errata repair logic or executing non-repair logic).

78: The virtualized errata management back-end module 101 reads the second errata processing context from the shared storage area.

79: The virtualized errata management back-end module 101 manages, based on the second errata processing context, scheduling of the VCPU thread of the virtual machine.

In some embodiments, the virtualized errata management back-end module 101 may learn, based on the second errata processing context, that a front end is processing the second errata, and prohibit cross-type CPU scheduling of the VCPU thread of the virtual machine, that is, only same-type CPU scheduling is allowed.

In some embodiments, in a process in which the front end processes the second errata, the virtualized errata management back-end module 101 may alternatively prohibit CPU scheduling of the VCPU thread, that is, same-type CPU scheduling is also not allowed. For example, for a homogeneous CPU architecture, in a process in which the front end processes the second errata, the virtualized errata management back-end module 101 prohibits CPU scheduling of the VCPU thread.

In some embodiments, after processing of the second errata is completed, the virtualized errata management front-end module 103 may also write a second errata processing completion context into the shared storage area. The virtualized errata management back-end module 101 may allow, based on the second errata processing completion context, scheduling of the VCPU thread (same-type CPU scheduling and cross-type CPU scheduling).

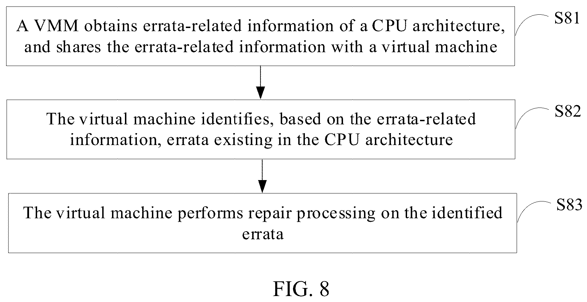

As shown in FIG. 8, an embodiment of this application provides a method for processing errata by a virtual machine, applied to an electronic device 10. The electronic device 10 includes a CPU architecture including at least one type of physical CPU, and a virtual machine and a VMM for managing the virtual machine run in the electronic device 10. In this embodiment, the method for processing errata by a virtual machine may include:
Step S81: The VMM obtains errata-related information of the CPU architecture, and shares the errata-related information with the virtual machine.

In some embodiments, the errata-related information may include CPU type information, timer errata information, and the like. An example in which errata in the CPU architecture include CPU errata and timer errata is used, and the errata-related information may include CPU type information and timer errata information.

The CPU type information includes type information of each type of physical CPU in the CPU architecture. The VMM may traverse a system register of each physical CPU in the CPU architecture to read the type information of each type of physical CPU. The timer errata information includes first timer errata information and second timer errata information. The VMM may compare the CPU type information with a preset timer errata table, to obtain the first timer errata information corresponding to the CPU type information. The VMM may further obtain an ACPI table or a DT table of firmware in the CPU architecture, read a timer errata-related information field from the ACPI table or the DT table, and obtain the second timer errata information through parsing based on the timer errata-related information field.

For example, the VMM includes a virtualized errata management back-end module 101, the virtual machine includes a virtualized errata management front-end module 103, and the virtualized errata management back-end module 101 traverses the system register of each physical CPU to read type information of each physical CPU, thereby obtaining the type information of each type of physical CPU through summarization. The virtualized errata management back-end module 101 reads the timer errata-related information field from the ACPI table or the DT table of the firmware in the CPU architecture, and parses the timer errata-related information field to obtain the second timer errata information. The virtualized errata management back-end module 101 may further compare the CPU type information with the preset timer errata table, to obtain the first timer errata information.

In some embodiments, a shared storage area such as a shared memory that both the virtual machine and the VMM have access permission may be configured on the electronic device 10. The VMM (for example, the virtualized errata management back-end module 101 of the VMM) may write the errata-related information into the shared storage area, and the virtual machine (for example, the virtualized errata management front-end module 103 of the virtual machine) may read, from the shared storage area, the errata-related information written by the VMM.

Step S82: The virtual machine identifies, based on the errata-related information, errata in the CPU architecture.

In some embodiments, an example in which the errata in the CPU architecture include CPU errata and timer errata is used. However, this embodiment of this application is not limited thereto. With development of technologies, there may be another type of errata, and the errata-related information may further include information used to identify the another type of errata. This is not limited in this application.

The virtual machine may compare the CPU type information with a preset CPU errata table, to obtain all CPU errata in the CPU architecture. The virtual machine may further obtain, based on the timer errata information, all timer errata in the CPU architecture.

Step S83: The virtual machine performs repair processing on the identified errata.

In some embodiments, a host OS of the electronic device and a gust OS of the virtual machine may include errata processing logic of various errata. To be specific, the errata processing logic of various errata is pre-written into the host OS and the gust OS. These errata include errata that exist in the CPU architecture and errata that do not exist in the CPU architecture. Errata may be classified based on a type, and may include CPU errata, timer errata, and the like. The errata may be further classified based on a management manner, and may be classified into static management type errata and dynamic management type errata. An example in which first errata are static management type errata is used; and when the guest OS of the virtual machine runs errata processing logic of the first errata, and it is determined that the first errata exist in the CPU architecture, errata repair logic is executed. An example in which the first errata are dynamic management type errata is used; and when the guest OS of the virtual machine runs errata processing logic of the first errata, it is determined, based on the CPU type information of the CPU architecture, whether to execute errata repair logic of the first errata. For example, it is determined, based on the CPU type information, that the first errata exist in the CPU architecture, and errata repair logic of the first errata is executed to repair the first errata. If it is determined that the first errata do not exist in the CPU architecture, non-repair logic of the first errata is executed, that is, the first errata are not repaired, thereby avoiding executing redundant errata repair logic, and improving performance of the virtual machine.

In some embodiments, a dynamic errata management switch is further configured in the virtual machine, and the dynamic errata management switch is used to choose whether to enable a dynamic errata processing mechanism. For example, the virtual machine may set the dynamic errata management switch to a disabled state or an enabled state in response to a user operation. If the dynamic errata management switch is set to the disabled state, that is, the dynamic errata processing mechanism is disabled, when the guest OS of the virtual machine runs errata processing logic of specific dynamic management type errata, it is determined, based on the CPU type information, whether to execute errata repair logic. For example, if it is determined, based on the CPU type information, that the dynamic management type errata exist in the CPU architecture, errata repair logic is executed; or if it is determined, based on the CPU type information, that the dynamic management type errata do not exist in the CPU architecture, non-repair logic is executed.

In some embodiments, if the dynamic errata management switch is set to the enabled state, that is, the dynamic errata processing mechanism is enabled, the VMM may maintain, at a back end in real time, type information of a physical CPU in which a VCPU thread of the virtual machine is located, and share the type information of the physical CPU in which the VCPU thread is located with the virtual machine (for example, the type information of the physical CPU in which the VCPU thread is located may be shared with the virtual machine by using the shared memory). The virtual machine may obtain, in real time, the type information that is maintained by the VMM and that is of the physical CPU in which the VCPU thread is located, and determine, based on the type information of the physical CPU in which the VCPU thread is located, whether to execute errata repair logic, thereby avoiding executing redundant errata repair logic, and further improving performance of the virtual machine.

For example, for static management type errata, even if the dynamic errata management switch is set to the enabled state, when the guest OS of the virtual machine runs errata processing logic of specific static management type errata, and it is determined that the static management type errata exist in the CPU architecture, errata repair logic may be directly executed. For dynamic management type errata, if the dynamic errata management switch is set to the enabled state, when the guest OS of the virtual machine runs errata processing logic of specific dynamic management type errata, it may be determined, based on a type of a physical CPU in which a VCPU thread is currently located, whether to execute errata repair logic. An example in which second errata are dynamic management type errata is used. When the guest OS of the virtual machine runs errata processing logic of the second errata, the virtual machine obtains the type that is maintained at the back end and that is of the physical CPU in which the VCPU thread is currently located, and determines, based on the type of the physical CPU, whether the second errata exist in that type of physical CPU. If it is determined that the second errata do not exist in that type of physical CPU, non-repair logic of the second errata is executed; or if it is determined that the second errata exist in that type of physical CPU, errata repair logic of the second errata is executed, thereby avoiding executing redundant errata repair logic, and improving performance of the virtual machine.

In some embodiments, when the virtual machine executes errata repair logic or non-repair logic of specific errata, the virtual machine may further maintain an errata processing context, the virtual machine may share the errata processing context with the VMM (for example, the virtual machine may share the errata processing context with the VMM based on the shared memory), and the VMM manages, based on the errata processing context, scheduling of the VCPU thread of the virtual machine. For example, the VMM may prohibit, based on the errata processing context, cross-type CPU scheduling of the VCPU thread of the virtual machine, or the VMM prohibits, based on the errata processing context, CPU scheduling of the VCPU thread of the virtual machine, thereby ensuring that the VCPU thread of the virtual machine correctly processes errata, and preventing the VCPU thread of the virtual machine from being scheduled, when processing non-repair logic of specific errata, to another CPU with the errata, to avoid causing an errata processing logic error and affecting normal running of the virtual machine.

In some embodiments, after the VCPU thread of the virtual machine completes errata processing, the virtual machine may maintain an errata processing completion context, and share the errata processing completion context with the VMM. The VMM may restore CPU scheduling permission of the VCPU thread of the virtual machine based on the errata processing completion context. For example, prohibiting cross-type CPU scheduling of the VCPU thread of the virtual machine is restored to allowing cross-type CPU scheduling of the VCPU thread of the virtual machine, and prohibiting CPU scheduling of the VCPU thread of the virtual machine is restored to allowing CPU scheduling of the VCPU thread of the virtual machine.

In an electronic device 10 provided in an embodiment of this application, an internal storage 121 may be configured to store instructions, and a processor 110 may be configured to invoke the instructions in the internal storage 121, so that the electronic device 10 performs the foregoing related method steps to implement the method for processing errata by a virtual machine in the foregoing embodiments.

An embodiment of this application further provides a computer storage medium. The computer storage medium stores computer instructions. When the computer instructions are run on an electronic device 10, the electronic device 10 is enabled to perform the foregoing related method steps to implement the method for processing errata by a virtual machine in the foregoing embodiments.

An embodiment of this application further provides a computer program product. When the computer program product is run on an electronic device, the electronic device is enabled to perform the foregoing related steps to implement the method for processing errata by a virtual machine in the foregoing embodiments.

In addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, to enable the chip to perform the method for processing errata by a virtual machine in the foregoing method embodiments.

The computer storage medium, the computer program product, or the chip provided in embodiments of this application is configured to perform the corresponding method provided above. Therefore, for beneficial effects that can be achieved, refer to the beneficial effects of the corresponding method provided above. Details are not described herein again.

The foregoing descriptions about implementations allow a person skilled in the art to clearly understand that, for the purpose of convenient and brief description, division of the foregoing functional modules is only used as an example for illustration. In actual application, the foregoing functions may be allocated to different functional modules and implemented according to a requirement, that is, an inner structure of an apparatus is divided into different functional modules to implement all or some of the functions described above. Modules in embodiments of this application may be a series of computer program instruction segments that can complete a specific function, or may be functional modules formed by cooperating with hardware in a computer program instruction segment.

In the several embodiments provided in this application, it should be understood that the disclosed apparatus and method may be implemented in other manners. For example, the described apparatus embodiment is an example. For example, division into the modules or the units is logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate components may or may not be physically separate, and components displayed as units may be one or more physical units, that is, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. A method for processing errata by a virtual machine, applied to an electronic device, wherein the electronic device comprises a CPU architecture comprising at least one type of physical central processing unit CPU, a virtual machine VM and a virtual machine monitor VMM for managing the VM running on the electronic device, and the method comprises:
obtaining, by the VMM, errata errata-related information of the CPU architecture, and sharing the errata-related information with the VM, wherein the errata-related information comprises CPU type information and timer errata timer errata information;
identifying, by the VM based on the errata-related information, errata in the CPU architecture; and
performing, by the VM, repair processing on the identified errata.

2. The method for processing errata by a virtual machine according to claim 1, wherein the CPU type information comprises type information of each type of physical CPU in the CPU architecture, the timer errata information comprises first timer errata information and second timer errata information, and the obtaining, by the VMM, errata errata-related information of the CPU architecture comprises:
traversing, by the VMM, a system register of each physical CPU in the CPU architecture to obtain the type information of each type of physical CPU;
comparing, by the VMM, the CPU type information with a preset timer errata table, to obtain the first timer errata information corresponding to the CPU type information; and
obtaining, by the VMM, an advanced configuration and power interface ACPI table or a device tree DT table of firmware in the CPU architecture, reading a timer errata-related information field from the ACPI table or the DT table, and obtaining the second timer errata information through parsing based on the timer errata-related information field.

3. The method for processing errata by a virtual machine according to claim 1 or 2, wherein a shared storage area that both the VM and the VMM have access permission is configured on the electronic device, and the sharing the errata-related information with the VM comprises:
writing, by the VMM, the errata-related information into the shared storage area; and
reading, by the VM, the errata-related information from the shared storage area.

4. The method for processing errata by a virtual machine according to claim 3, wherein the identifying, by the VM based on the errata-related information, errata in the CPU architecture comprises:
comparing, by the VM, the CPU type information with a preset CPU errata table, to obtain CPU errata in the CPU architecture; and
obtaining, by the VM based on the timer errata information, timer errata in the CPU architecture.

5. The method for processing errata by a virtual machine according to any one of claims 1 to 4, wherein a guest operating system guest OS is carried on the VM, the identified errata comprise static management type errata and dynamic management type errata, and the performing, by the VM, repair processing on the identified errata comprises:
when the guest OS of the VM runs errata processing logic of first errata, the first errata are the static management type errata, and it is determined that the first errata exist in the CPU architecture, executing, by the VM, errata repair logic of the first errata, to repair the first errata;
when the guest OS of the VM runs errata processing logic of first errata, the first errata are the dynamic management type errata, and it is determined that the first errata exist in the CPU architecture, executing, by the VM, errata repair logic of the first errata, to repair the first errata; and
when the guest OS of the VM runs errata processing logic of first errata, the first errata are the dynamic management type errata, and it is determined that the first errata do not exist in the CPU architecture, executing, by the VM, non-repair logic of the first errata.

6. The method for processing errata by a virtual machine according to claim 5, wherein the VM further comprises a dynamic errata management switch, and the when the guest OS of the VM runs errata processing logic of first errata, the first errata are the dynamic management type errata, and it is determined that the first errata exist in the CPU architecture, executing, by the VM, errata repair logic of the first errata comprises:
when the guest OS of the VM runs the errata processing logic of the first errata, the first errata are the dynamic management type errata, it is determined that the first errata exist in the CPU architecture, and the dynamic errata management switch is in a disabled state, executing, by the VM, the errata repair logic of the first errata; and
the when the guest OS of the VM runs errata processing logic of first errata, the first errata are the dynamic management type errata, and it is determined that the first errata do not exist in the CPU architecture, executing, by the VM, non-repair logic of the first errata comprises:
when the guest OS of the VM runs the errata processing logic of the first errata, the first errata are the dynamic management type errata, it is determined that the first errata do not exist in the CPU architecture, and the dynamic errata management switch is in the disabled state, executing, by the VM, the non-repair logic of the first errata.

7. The method for processing errata by a virtual machine according to any one of claims 1 to 4, wherein the VM further comprises a dynamic errata management switch, the dynamic errata management switch is in an enabled state, and the method further comprises:
obtaining, by the VMM, type information of a physical CPU in which a virtual central processing unit VCPU thread of the VM is located, and sharing, with the VM, the type information of the physical CPU in which the VCPU thread is located, wherein the VM may further perform errata repair processing based on the type information of the physical CPU in which the VCPU thread is located.

8. The method for processing errata by a virtual machine according to claim 7, wherein a guest OS is carried on the VM, the identified errata comprise static management type errata and dynamic management type errata, and the performing, by the VM, repair processing on the identified errata comprises:
when the guest OS of the VM runs errata processing logic of second errata, the second errata are the static management type errata, and it is determined that the second errata exist in the CPU architecture, executing, by the VM, errata repair logic of the second errata, to repair the second errata;
when the guest OS of the VM runs errata processing logic of second errata, the second errata are the dynamic management type errata, and it is determined, based on the type information of the physical CPU in which the VCPU thread is located, that the second errata exist in the CPU in which the VCPU thread is located, executing, by the VM, errata repair logic of the second errata, to repair the second errata; and
when the guest OS of the VM runs errata processing logic of second errata, the second errata are the dynamic management type errata, and it is determined, based on the type information of the physical CPU in which the VCPU thread is located, that the second errata do not exist in the CPU in which the VCPU thread is located, executing, by the VM, non-repair logic of the second errata.

9. The method for processing errata by a virtual machine according to claim 8, wherein the method further comprises:
sharing, by the VM, a second errata processing context with the VMM; and
managing, by the VMM based on the second errata processing context, scheduling of the VCPU thread of the VM.

10. The method for processing errata by a virtual machine according to claim 9, wherein the managing, by the VMM based on the second errata processing context, scheduling of the VCPU thread of the VM comprises:
prohibiting, by the VMM based on the second errata processing context, cross-type CPU scheduling of the VCPU thread of the VM; or
prohibiting, by the VMM based on the second errata processing context, CPU scheduling of the VCPU thread of the VM.

11. The method for processing errata by a virtual machine according to claim 10, wherein the method further comprises:
when processing of the second errata is completed, sharing, by the VM, a second errata processing completion context with the VMM; and
restoring, by the VMM, CPU scheduling permission of the VCPU thread of the VM based on the second errata processing completion context.

12. A computer-readable storage medium, comprising computer instructions, wherein when the computer instructions are run on an electronic device, the electronic device is enabled to perform the method for processing errata by a virtual machine according to any one of claims 1 to 11.

13. An electronic device, wherein the electronic device comprises a processor and a storage, the storage is configured to store instructions, and the processor is configured to invoke the instructions in the storage, so that the electronic device performs the method for processing errata by a virtual machine according to any one of claims 1 to 11.

14. A computer program product, comprising computer instructions, wherein when the computer instructions are run on a processor, an electronic device is enabled to perform the method for processing errata by a virtual machine according to any one of claims 1 to 11.
